# EUROPEAN PATENT APPLICATION

(11) **EP 4 696 578 A1**
(43) Date of publication of application: **18.02.2026**
(21) Application number: 25769136.0
(22) Date of filing: 17.01.2025
(51) Int. Cl.: B60W 30/18, B60W 50/14, B60W 10/04, B60W 10/18, B60W 10/20

(54) **VEHICLE DRIVING CONTROL METHOD AND APPARATUS, VEHICLE, ELECTRONIC DEVICE, AND STORAGE MEDIUM**

(30) Priority: 14.03.2024 CN 202410291114
(71) Applicant: Chongqing Changan Technology Co., Ltd., Chongqing 401135 (CN)
(72) Inventor: XU, Yang, Chongqing 401135 (CN); YANG, Jian, Chongqing 401135 (CN); YU, Bin, Chongqing 401135 (CN); CHEN, Changyou, Chongqing 401135 (CN)
(74) Representative: Studio Torta S.p.A.
(86) International application number: PCT/CN2025/072944
(87) International publication number: WO 2025/189962

(57) **Abstract**

A vehicle driving control method and apparatus, a vehicle, an electronic device, and a storage medium. The method includes: receiving a judgment signal for exiting a driving assistance function; generating, based on the judgment signal for exiting a driving assistance function, an indication signal indicating that the driving assistance function is currently exited, in response to an activation of an exit operation for the driving assistance function; controlling a control response parameter of the vehicle driving control system to be adjusted to a preset parameter based on the indication signal. In particular, the control response parameter is configured to perform a control for the vehicle within a corresponding response time, and a response time corresponding to the preset parameter is shorter than a response time corresponding to the control response parameter before adjustment.

## Description

### CROSS-REFERENCE TO RELATED APPLICATIONS

This application claims priority to Chinese Patent Application No. 202410291114.X, entitled "Vehicle driving control method and apparatus, vehicle, electronic device, and storage medium," filed on March 14, 2024, the entire contents of which are incorporated herein by reference.

### TECHNICAL FIELD

This application relates to, but is not limited to, the field of intelligent vehicle technologies, and in particular, to vehicle driving control method and apparatus, a vehicle, an electronic device, and a storage medium.

### BACKGROUND

When the vehicle is in automatic assisted driving mode, the vehicle determines a tracking speed and a tracking distance of the automatic driving based on current vehicle parameters and environment parameters. When a fault is generated in the automatic assisted driving or the automatic assisted driving is exited unexpectedly, the assisted driving system sends a prompt for a driver to take over the vehicle. After the intelligent driving assistance function is exited, the vehicle is completely dependent on the control by the driver itself to ensure vehicle safety. When the assisted driving is exited under some dangerous operation conditions or the driver is inattentive, the reaction time of the driver is uncontrollable, so that the vehicle is unable to be controlled in a timely manner and the driving safety of the vehicle is affected.

### TECHNICAL SOLUTION

The following is a summary of subject matter described in detail herein. This summary is not intended to limit the scope of the claims.

The present application provides vehicle driving control method and apparatus, a vehicle, an electronic device, and a storage medium.

According to a first aspect, the present application provides a vehicle driving control method, the method includes: receiving a judgment signal for exiting a driving assistance function; determining an activation of an exit operation for the driving assistance function based on the judgment signal for exiting the driving assistance function; generating an indication signal indicating that the driving assistance function is currently exited, in response to the activation of the exit operation for the driving assistance function; controlling a control response parameter of the vehicle driving control system to be adjusted to a preset parameter based on the indication signal, where the control response parameter is configured to perform a control for the vehicle within a corresponding response time, and a response time corresponding to the preset parameter is shorter than a response time corresponding to the control response parameter before adjustment.

In a possible implementation, after the controlling the control response parameter of the vehicle driving control system to be adjusted to the preset parameter based on the indication signal, the method further includes: adjusting the control response parameter of the vehicle driving control system to an initial parameter, in response to a fact that a time difference between a current moment and an activating moment of the exit operation for the driving assistance function is greater than or equal to a preset transition duration, and that a control operation corresponding to the vehicle control system is not performed by a user at the current moment.

In a possible implementation, the vehicle driving control system includes at least one of the following: a vehicle braking subsystem, a vehicle driving subsystem, and a vehicle steering assistance subsystem; and controlling the control response parameter of the vehicle driving control system to be adjusted to the preset parameter based on the indication signal includes at least one of the following: controlling a braking pressure of the vehicle braking subsystem to increase to a preset pressure based on the indication signal; adjusting a throttle response curve of the vehicle driving subsystem to increase a throttle torque response by a first preset multiple based on the indication signal; adjusting a steering assistance curve of the vehicle steering assistance subsystem to increase a steering assistance intensity by a second preset multiple based on the indication signal.

In a possible implementation, the determining the activation of the exit operation for the driving assistance function based on the judgment signal for exiting the driving assistance function includes: determining an activation of the exit operation for the driving assistance function, in response to at least one of the following: the judgment signal for exiting the driving assistance function includes a first signal indicating switching from an assisted driving state to a manual driving state, includes a second signal indicating a fault of a sensor in the vehicle, and includes a third signal indicating a fault of the assisted driving system of the vehicle.

According to a second aspect, the present application provides a vehicle, the vehicle includes: an assisted driving system and a vehicle driving control system, where the assisted driving system and the vehicle driving control system are communicatively connected; the assisted driving system is configured to receive a judgment signal for exiting a driving assistance function; to determine an activation of an exit operation for the driving assistance function based on the judgment signal for exiting the driving assistance function; to generate an indication signal indicating that the driving assistance function is currently exited, in response to the activation of the exit operation for the driving assistance function, and to send the indication signal to the vehicle driving control system; and the vehicle driving control system is configured to receive the indication signal and adjust a control response parameter of the vehicle driving control system to a preset parameter, where the control response parameter is configured to perform a control for the vehicle within a corresponding response time, and a response time corresponding to the preset parameter is shorter than a response time corresponding to the control response parameter before adjustment.

In a possible implementation, the vehicle further includes a central control system and a sensing system; the central control system is configured to send a first signal to the assisted driving system when detecting that a driving state is switched from a driving assistance state to a manual driving state by a user; the sensing system is configured to send a second signal to the assisted driving system when detecting a fault of a sensor in the vehicle; and the assisted driving system is further configured to generate a third signal when detecting a fault of the assisted driving system, and to determine the activation of the exit operation for the driving assistance function when detecting at least one of the first signal, the second signal, and the third signal.

In a possible implementation, the vehicle driving control system includes at least one of the following: a vehicle braking subsystem, a vehicle driving subsystem, and a vehicle steering assistance subsystem; the vehicle braking subsystem is configured to control a braking pressure of the vehicle braking subsystem to increase to a preset pressure, in response to receiving the indication signal; the vehicle driving subsystem is configured to adjust a throttle response curve of the vehicle driving subsystem to increase a torque response by a first preset multiple in response to receiving the indication signal; and the vehicle steering assistance subsystem is configured to adjust the steering assistance curve of the vehicle steering assistance subsystem to increase the steering assistance intensity by a second preset multiple in response to receiving the indication signal.

According to a third aspect, the present application provides a vehicle driving control apparatus, the apparatus includes: a receiving station configured to receive a judgment signal for exiting a driving assistance function; a determining station configured to determine an activation of an exit operation for the driving assistance function based on the judgment signal for exiting the driving assistance function; a generation station configured to generate an indication signal indicating that the driving assistance function is currently exited, in response to the activation of the exit operation for the driving assistance function; and a control station configured to control a control response parameter of the vehicle driving control system to be adjusted to a preset parameter based on the indication signal, where the control response parameter is configured to perform a control for the vehicle within a corresponding response time, and a response time corresponding to the preset parameter is shorter than a response time corresponding to the control response parameter before adjustment.

According to a fourth aspect, the present application provides an electronic device, including: a memory configured to store a computer program; and a processor configured to execute the computer program stored in the memory, and when the computer program is executed, the method according to any embodiment of the vehicle driving control method in the first aspect of the present application is implemented.

According to a fifth aspect, the present application provides a computer-readable storage medium, where a computer program stored thereon, and where when the computer program is executed by a processor, the method according to any embodiment of the vehicle driving control method in the first aspect of the present application is implemented.

According to a sixth aspect, the present application provides a computer program, where the computer program includes computer-readable code, and when the computer-readable code runs on a device, a processor in the device is configured to implement the method according to any embodiment of the vehicle traveling control method in the first aspect.

Other aspects may be apparent upon reading and understanding the accompanying drawings and detailed description.

### BENEFICIAL EFFECTS

The present application includes the following advantages:

According to the vehicle driving control method and apparatus, the vehicle, the electronic device, and the storage medium provided by the embodiments of the present application, by receiving a judgment signal for exiting a driving assistance function, an activation of an exit operation for the driving assistance function is determined; in response to the activation of the exit operation for the driving assistance function, the indication signal indicating that the driving assistance function is currently exited is generated; and the control response parameter of the vehicle driving control system is controlled to be adjusted to the preset parameter based on the indication signal, so that the response time of vehicle control is shortened accordingly. It realizes that when the driving assistance function is exited, the control response parameter of the vehicle driving control system is adjusted first, so that the state of the vehicle driving control system may quickly respond to the manipulation of the driver during manual driving, which is beneficial to eliminating the risk of untimely vehicle control caused by the excessively long reaction time of the driver when the assisted driving is deactivated, and improves the safety of vehicle driving.

### BRIEF DESCRIPTION OF THE DRAWINGS

The accompanying drawings, which are incorporated in and constitute a part of this specification, illustrate embodiments consistent with the present application, and serve to explain the principles of the present disclosure together with the description.

The accompanying drawings required for describing the embodiments or the prior art will be briefly introduced below. Obviously, for those of ordinary skill in the art, other accompanying drawings may also be obtained based on these accompanying drawings without making creative efforts.

One or more embodiments are exemplarily described by pictures in the accompanying drawings corresponding thereto. These exemplary descriptions do not constitute a limitation to the embodiments. Elements with the same reference numerals in the accompanying drawings are represented as similar elements, and unless otherwise stated, the drawings in the accompanying drawings do not constitute a scale limitation.
FIG. 1 is a schematic flowchart of a vehicle driving control method according to an embodiment of the present application.
FIG. 2 is a schematic diagram of a system architecture of a vehicle according to an embodiment of the present application.
FIG. 3 is a schematic diagram of another system architecture of a vehicle according to an embodiment of the present application.
FIG. 4 is an exemplary flowchart of a specific application scenario according to an embodiment of the present application.
FIG. 5 is a schematic structural diagram of a vehicle driving control apparatus according to an embodiment of the present application.
FIG. 6 is a schematic structural diagram of an electronic device according to an embodiment of the present application.

### EMBODIMENTS OF THE PRESENT APPLICATION

Various exemplary embodiments of the present application will now be described in detail with reference to the accompanying drawings. Obviously, the described embodiments are a part of the embodiments of the present application, rather than all of the embodiments. It should be noted that, unless specifically stated otherwise, the relative arrangements of components and steps, numerical expressions, and numerical values set forth in these embodiments do not limit the scope of the present application.

A person skilled in the art may understand that terms such as "first" and "second" in the embodiments of the present application are merely used to distinguish different objects such as steps or devices, and neither represent any specific technical meaning nor represent a logical sequence between the objects.

It should be further understood that, in the present embodiment, "a plurality of" may mean two or more, and "at least one" may mean one, two, or more.

It should be further understood that any component, data, or structure mentioned in the embodiments of the present application may be generally understood as one or more components, data, or structures without being explicitly defined or provided with opposite enlightenment in the context.

In addition, the term "and/or" in the present application is merely an association relationship for describing associated objects, indicating that there may be three kinds of relationships. For example, A and/or B may indicate: A exists alone, both A and B exist, and B exists alone. In addition, the character "/" in the present application generally indicates that the associated objects before and after are in an "or" relationship.

It should be further understood that the description of each embodiment in the present application emphasizes the differences between the various embodiments, and their same or similar parts may be referred to each other. For the sake of brevity, they will not be repeated one by one.

The following description of at least one exemplary embodiment is merely illustrative in nature and is in no way intended to limit the present application, its application or uses.

Techniques, methods, and devices known to those of ordinary skill in the art may not be discussed in detail, but where appropriate, the above techniques, methods, and devices should be considered part of the specification.

It should be noted that similar reference numerals and letters indicate similar items in the following drawings, and therefore, once an item is defined in one drawing, it does not need to be further discussed in subsequent drawings.

It should be noted that, in the case of no conflict, the embodiments in the present application and the features in the embodiments may be combined with each other. To facilitate the understanding of the embodiments of the present application, the present application will be described in detail below with reference to the accompanying drawings and in conjunction with the embodiments. Apparently, the described embodiments are some, but not all, of the embodiments of the present application. All other embodiments obtained by a person of ordinary skill in the art based on the embodiments of the present application without creative efforts shall fall within the protection scope of the present application.

In order to solve the technical problem in the prior art that the driving risk of the driver is raised due to too long reaction time when the driving assistance function is exited, embodiments of the present application provide a vehicle driving control method, which can reduce the risk of untimely vehicle control caused by too long reaction time of the driver when the assisted driving is deactivated.

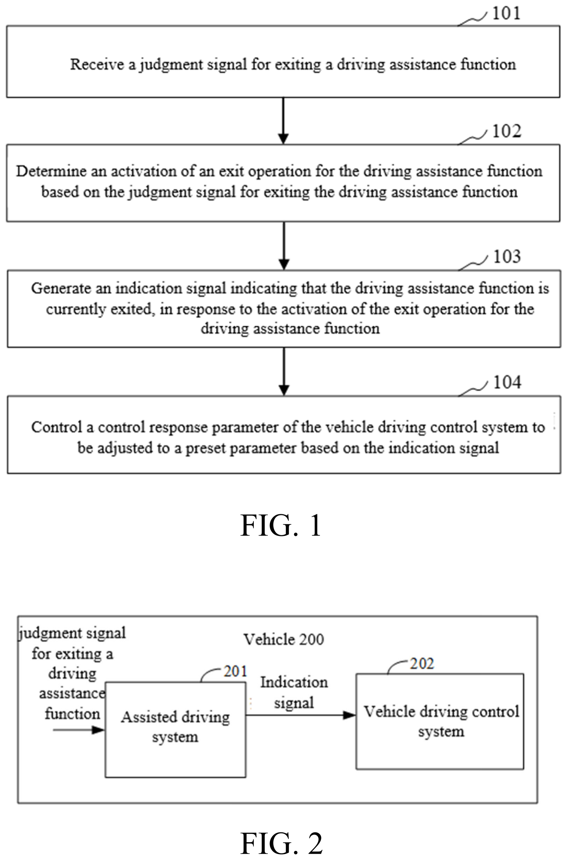

FIG. 1 is a schematic flowchart of a vehicle driving control method according to an embodiment of present application. The method may be applied to an intelligent driving vehicle and may be performed by an electronic device such as an on-board controller in the intelligent driving vehicle, or may be performed by an electronic device such as a server communicatively connected to the intelligent driving vehicle. These electronic devices are connected to devices such as the vehicle driving control system in the vehicle to adjust the control response parameters of the vehicle driving control system. In addition, the method may be performed by hardware or software. When the above-mentioned execution body is hardware, the execution body may be one or more of the above-mentioned electronic devices. For example, a single electronic device may perform the method, or multiple electronic devices may cooperate with each other to perform the method. When the above-mentioned execution body is software, the method may be implemented as a plurality of software or software stations, or may be implemented as a single software or software station. This is not specifically limited herein.

As shown in FIG. 1, the method specifically includes the following steps.

Step 101, a judgment signal for exiting a driving assistance function is received.

In the present embodiment, the electronic device may receive an input judgment signal for exiting a driving assistance function, and the judgment signal for exiting the driving assistance function is configured as a reference signal for judging whether to exit the assisted driving. As an example, the judgment signal for exiting the driving assistance function may include a signal generated when the assisted driving mode and the manual driving mode are switched from each other by a user, which may be sent by a central control system of the vehicle; it may further include a fault signal of a sensor such as a camera and a laser radar in the vehicle, which is sent by a sensing system in the vehicle.

Step 102, an activation of an exit operation for the driving assistance function is determined based on the activation of the exit operation for the driving assistance function.

In the present embodiment, the judgment signal for exiting a driving assistance function may include at least one type of signal. In response to the matching between any one of the signals and the corresponding preset signal, it indicates that the exit operation for the driving assistance function is activated. For example, in response to the judgment signal for exiting the driving assistance function including a signal indicating that the assisted driving mode is switched to the manual driving mode by a user, it is determined that the exit operation for the driving assistance function is activated. For another example, in response to the judgment signal for exiting the driving assistance function including a signal indicating that a sensor is faulty, it is determined that the exit operation for the driving assistance function is activated.

Step 103, in response to the activation of the exit operation for the driving assistance function, an indication signal indicating that the driving assistance function is currently exited is generated.

In the present embodiment, the above-mentioned indication signal may be configured to instruct the vehicle driving control system in the vehicle to adjust the control response parameters. For example, assuming that the indication signal is ADAS _ SysSts. In the assisted driving mode, ADAS _ SysSts is Active (for example, represented by a number 1), and in response to the activation of the exit operation for the driving assistance function, ADAS_ SysSts becomes Not Active (for example, represented by a number 0).

Optionally, in response to the activation of the exit operation for the driving assistance function, the electronic device may also output a prompt information configured to prompt the user that the driving assistance function is currently exited, so as to timely remind the user to manually control the vehicle, thereby improving driving safety.

Step 104, a control response parameter of the vehicle driving control system is controlled to be adjusted to a preset parameter based on the indication signal.

In the present embodiment, the electronic device may send the indication signal to the vehicle driving control system. The controller included in the vehicle driving control system may further adjust the control response parameter according to a preset parameter adjustment rule. Alternatively, the electronic device may directly control various driving devices included in the vehicle driving control system to realize the adjustment of the control response parameter. The control response parameter is configured to execute a control of the vehicle within the corresponding response time; correspondingly, adjusting the control response parameter may change the response time. In order to improve the response speed of the vehicle, the response time corresponding to the preset parameter is shorter than the response time corresponding to the control response parameter before adjustment.

The vehicle driving control system may include at least one subsystem configured to drive related devices when the vehicle travels. As an example, the vehicle driving control system may include, but is not limited to, at least one of the following: a braking subsystem, a driving subsystem, a steering assistance subsystem, etc. Each subsystem corresponds to a type of preset parameter, and a setting principle of the preset parameters may be to shorten a response time for vehicle control when the user manually drives. For example, the braking pressure of the braking subsystem may be pre-charged by presetting the braking pressure parameter of the braking subsystem, so as to shorten the distance between the braking device and the brake pad, so that the braking operation of the user may be quickly responded to when the user brakes; for another example, the throttle response curve of the driving subsystem may be preset, so that when the driving assistance function is exited, the torque response corresponding to the throttle response curve is increased, so that the acceleration operation of the user may be quickly responded to when the user accelerates.

The vehicle driving control method provided by the embodiment of the present application receives the judgment signal for exiting a driving assistance function; determines an activation of an exit operation for the driving assistance function; generates an indication signal indicating that the driving assistance function is currently exited, in response to the activation of the exit operation for the driving assistance function; and controls the control response parameter of the vehicle driving control system to be adjusted to preset parameter based on the indication signal, correspondingly changing the response time of vehicle control. It realizes that when the driving assistance function is exited, the control response parameter of the vehicle driving control system is adjusted first, so that the state of the vehicle driving control system may quickly respond to the manipulation of the driver during manual driving, which is beneficial to eliminating the risk of untimely vehicle control caused by the excessively long reaction time of the driver when the assisted driving is deactivated, and improves the safety of vehicle driving.

In some alternative implementations of the present embodiment, after step 104, the method further includes:
In response to a fact that a time difference between a current moment and an activating moment of the exit operation for the driving assistance function is greater than or equal to a preset transition duration, and that the control operation corresponding to the vehicle control system is not performed by a user at the current moment, the control response parameter of the vehicle driving control system is adjusted to an initial parameter.

In particular, the initial parameter is a parameter set in a normal state of the vehicle. In response to the current moment exceeding the preset transition duration and the non-manual control for the vehicle by the user, the control response parameter may be restored to the initial parameter. In response to to the vehicle being controlled by the user at the end of the preset transition duration, restoring the control response parameter to the initial parameter after waiting until a current control operation of the user is completed. For example, the preset transition duration may be 5 seconds. When more than 5 seconds have passed since the execution of the exit operation for the driving assistance function, in response to that the braking operation is not performed by the user at this time, the control response parameter may be restored, the pre-charging pressure is released, and the vehicle performs the braking operation according to the braking mode in the normal manual driving state. For another example, in response to exceeding 5 seconds after the execution of the exit operation for the driving assistance function, the throttle response curve of the vehicle drive subsystem may be restored, and the vehicle performs the acceleration operation according to the throttle response curve in the normal manual driving state.

In the present embodiment, by setting the transition duration after the exit operation for the driving assistance function, the response time for the user to manually control the vehicle is shortened within a period of time after the driving assistance function is exited. After this period of time, the control response parameter under normal manual driving is restored, so that the control mode of the vehicle conforms to the driving habits of the user, and the driving risk caused by the inadaptation of the user against the adjusted control response parameter is avoided.

In some alternative implementations of the present embodiment, the vehicle driving control system includes at least one of the following: a vehicle braking subsystem, a vehicle driving subsystem, and a vehicle steering assistance subsystem.

In step 104, at least one of the following manners may be performed to adjust the control response parameter of the vehicle driving control system to preset parameter:
Manner 1, the braking pressure of the vehicle braking subsystem is controlled to increase to a preset pressure based on the indication signal.
   Specifically, the indication signal may be sent to the controller included in the vehicle braking subsystem, and the controller adjusts the braking pressure parameter to increase the braking pressure to the preset pressure, thereby reducing the spacing between the braking device and the brake pad, so that the braking operation may be quickly responded to when the user performs a braking operation.
Manner 2, the throttle response curve of the vehicle driving subsystem is adjusted based on the indication signal, so that the throttle torque response is increased by a first preset multiple.
   Specifically, the indication signal may be sent to the controller included in the vehicle driving subsystem, and the controller adjusts the throttle response curve to increase the throttle torque response by the first preset multiple. The first preset multiple may be obtained through pre-calibration. For example, the first preset multiple may be 1.2, that is, the original value of the throttle torque response is multiplied by 1.2 to obtain a new throttle response curve. After adjusting the throttle response curve, the acceleration operation may be quickly responded to when the user performs an acceleration operation.
Manner 3, the steering assistance curve of the vehicle steering assistance subsystem is adjusted based on the indication signal, so that the steering assistance intensity is increased by a second preset multiple.

Specifically, the indication signal may be sent to the controller included in the vehicle steering assistance subsystem, and the controller adjusts the steering assistance curve to increase the steering assistance intensity by the second preset multiple. The second preset multiple may be obtained through pre-calibration. For example, the second preset multiple may be 1.2, that is, the original value of the steering assistance intensity is multiplied by 1.2 to obtain a new steering assistance curve. After adjusting the steering assistance curve, the steering operation may be quickly responded to when the user performs a steering operation.

In the present embodiment, by setting corresponding preset parameters for the vehicle braking subsystem, vehicle driving subsystem, and vehicle steering assistance subsystem of the vehicle respectively, the braking operation, the acceleration operation, and the steering operation from the user may be quickly responded to when the driving assistance function is deactivated. Thus, within the transition stage after the driving assistance function is deactivated, the response time of manual vehicle control may be shortened, and driving safety may be improved.

In some alternative implementations of the present embodiment, step 102 includes:
In response to at least one of the following: the judgment signal for exiting the driving assistance function includes a first signal indicating switching from the assisted driving state to the manual driving state, includes a second signal indicating a fault of a sensor in the vehicle, and includes a third signal indicating a fault of the assisted driving system of the vehicle, the exit operation for the driving assistance function is determined.

Among them, the first signal is usually generated when the user switches to the manual driving state by pressing a key, clicking a button on the screen, or other means. The second signal is generated by a sensing system in the vehicle when it detects a fault of a sensor required for assisted driving, such as a camera and a laser radar. That is, in response to detecting a sensor fault, the assisted driving state is automatically exited, and the user performs manual driving. The third signal is generated by the assisted driving system in the vehicle when a fault of the assisted driving system is detected. That is, in response to detecting a fault of the assisted driving system, the assisted driving state is automatically exited, and the user performs manual driving.

As an example, ADAS _ ActiveReq represents the first signal: when it is 1, it indicates that the vehicle is switched to the assisted driving state; and when it is 0, it indicates that the vehicle is switched to the manual driving state. Sensing _ Fail represents the second signal: when it is 1, it indicates that a sensor fault occurs; and when it is 0, it indicates that the sensor is normal. ADAS _ Fail represents the third signal: when it is 1, it indicates that a fault occurs in the assisted driving system; and when it is 0, it indicates that the assisted driving system is normal. In response to detecting that at least one of the three conditions (ADAS _ ActiveReq is 0, Sensing _ Fail is 1, and ADAS_Fail is 1) is satisfied, it indicates that the exit operation for the driving assistance function is activated by the vehicle.

In the present embodiment, by detecting the three types of judgment signal for exiting the driving assistance function, it is possible to more comprehensively detect the activation of the exit operation for the driving assistance function, thereby adjusting the control response parameter of the vehicle driving control system more accurately.

FIG. 2 is a schematic diagram of a system architecture of a vehicle according to an embodiment of the present application. The vehicle 200 includes an assisted driving system 201 and a vehicle driving control system 202. The assisted driving system 201 and the vehicle driving control system 202 are communicatively connected. In particular, the assisted driving system 201 is configured to perform various driving assistance functions, such as automatic cruise, automatic parking, and obstacle detection, etc. The vehicle driving control system 202 may include at least one subsystem, and each subsystem is configured to drive devices related to vehicle driving.

The assisted driving system 201 is configured to: receive a judgment signal for exiting a driving assistance function; to determine an activation of an exit operation for the driving assistance function based on the judgment signal for exiting the driving assistance function; and to generate an indication signal indicating that the driving assistance function is currently exited, in response to the activation of the exit operation for the driving assistance function, and to send the indication signal to the vehicle driving control system.

Steps performed by the assisted driving system 201 are basically the same as steps 101 to 103 in the embodiment corresponding to FIG. 1, and details are not described herein again.

The vehicle driving control system is configured to receive the indication signal and adjust a control response parameter of the vehicle driving control system to a preset parameter. In particular, the control response parameter is configured to perform a control for the vehicle within a corresponding response time, and a response time corresponding to the preset parameter is shorter than a response time corresponding to the control response parameter before adjustment.

As an example, the vehicle driving control system may include, but is not limited to, at least one of the following: a vehicle braking subsystem, a vehicle driving subsystem, a vehicle steering assistance subsystem, etc. Each subsystem corresponds to a type of preset parameter, and a setting principle of the preset parameter may be to shorten a response time for vehicle control when the user manually drives. For example, the braking pressure of the braking subsystem may be pre-charged by presetting the braking pressure parameter of the braking subsystem, so as to shorten the distance between the braking device and the brake pad, so that the braking operation of the user may be quickly responded to when the user brakes; for another example, the throttle response curve of the driving subsystem may be preset, so that when the driving assistance function is exited, the torque response corresponding to the throttle response curve is increased, so that the acceleration operation of the user may be quickly responded to when the user accelerates.

The vehicle provided by the embodiment of the present application, the assisted driving system in the vehicle receives the judgment signal for exiting a driving assistance function; generates an indication signal indicating that the driving assistance function is currently exited, in response to the judgment signal for exiting a driving assistance function indicating that the exit operation for the driving assistance function is activated, and sends the indication signal to the vehicle driving control system in the vehicle. The vehicle driving control system adjusts the control response parameter to preset parameter based on the indication signal, correspondingly shortening the response time of vehicle control. It realizes that when the driving assistance function is exited, the control response parameter of the vehicle driving control system is adjusted first, so that the state of the vehicle driving control system may quickly respond to the manipulation of the driver during manual driving, which is beneficial to eliminating the risk of untimely vehicle control caused by the excessively long reaction time of the driver when the assisted driving is deactivated, and improves the safety of vehicle driving.

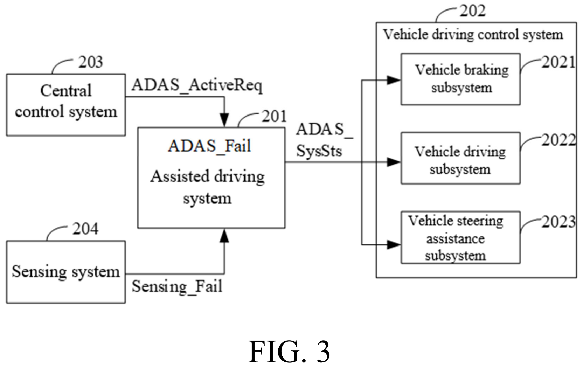

In some alternative implementations of the present embodiment, as shown in FIG. 3, the vehicle further includes a central control system 203 and a sensing system 204.

The central control system 203 is configured to detect whether assisted driving and manual driving are switched from each other by the user, and to send a first signal to the assisted driving system 201, in response to detecting that the driving state is switched from the assisted driving state to the manual driving state by the user.

The sensing system 204 includes a camera, a laser radar, and other sensors configured to sense the driving environment of the vehicle. The sensing system 204 may detect whether a sensor is faulty and send a second signal to the assisted driving system 201, in response to detecting a fault of a sensor in the vehicle.

The assisted driving system 201 is further configured to generate a third signal, in response to detecting a fault of the assisted driving system 201; and to determine the activation of the exit operation for the driving assistance function when detecting at least one of the first signal, the second signal, and the third signal.

As shown in FIG. 3, ADAS _ ActiveReq represents the first signal: when it is 1, it indicates that the vehicle is switched to the assisted driving state; and when it is 0, it indicates that the vehicle is switched to the manual driving state. Sensing _ Fail represents the second signal: when it is 1, it indicates that a sensor fault occurs; and when it is 0, it indicates that the sensor is normal. ADAS _ Fail represents the third signal: when it is 1, it indicates that a fault occurs in the assisted driving system; and when it is 0, it indicates that the assisted driving system is normal. When it is detected that at least one of the three conditions (ADAS_ ActiveReq being 0, Sensing _ Fail being 1, and ADAS _ Fail being 1) is satisfied, it indicates that the exit operation for the driving assistance function is activated by the vehicle.

In the present embodiment, by detecting the judgment signals for exiting a driving assistance function corresponding to the central control system, the sensing system, and the assisted driving system respectively, it is possible to more comprehensively detect the activation of the exit operation for the driving assistance function, thereby adjusting the control response parameter of the vehicle driving control system more accurately.

In some alternative implementations of the present embodiment, as shown in FIG. 3, the vehicle driving control system 202 includes at least one of the following: a vehicle braking subsystem 2021, a vehicle driving subsystem 2022, and a vehicle steering assistance subsystem 2023. As shown in FIG. 3, ADAS _ SysSts represents an indication signal, and when ADAS_ SysSts is 0, it indicates that exit operation for the driving assistance function is activated by the vehicle.

The vehicle braking subsystem 2021 is configured to control the braking pressure of the vehicle braking subsystem to increase to a preset pressure, in response to receiving the indication signal.

Specifically, the controller included in the vehicle braking subsystem may adjust the braking pressure parameter to increase the braking pressure to the preset pressure, thereby reducing the spacing between the braking device and the brake pad, so that the braking operation may be quickly responded to when the user performs a braking operation.

The vehicle driving subsystem 2022 is configured to adjust the throttle response curve of the vehicle driving subsystem to increase the throttle torque response by a first preset multiple, in response to receiving the indication signal.

Specifically, the controller included in the vehicle driving subsystem may adjust the throttle response curve to increase the throttle torque response by the first preset multiple. The first preset multiple may be obtained through pre-calibration. For example, the first preset multiple may be 1.2, that is, the original value of the throttle torque response is multiplied by 1.2 to obtain a new throttle response curve. After adjusting the throttle response curve, the acceleration operation may be quickly responded to in response to the user performing an acceleration operation.

The vehicle steering assistance subsystem 2023 is configured to adjust the steering assistance curve of the vehicle steering assistance subsystem to increase the steering assistance intensity by a second preset multiple, in response to the indication signal.

Specifically, the controller included in the vehicle steering assistance subsystem may adjust the steering assistance curve to increase the steering assistance intensity by the second preset multiple. The second preset multiple may be obtained through pre-calibration. For example, the second preset multiple may be 1.2, that is, the original value of the steering assistance intensity is multiplied by 1.2 to obtain a new steering assistance curve. After adjusting the steering assistance curve, the steering operation may be quickly responded to in response to the user performing a steering operation.

In the present embodiment, by setting corresponding preset parameters for the vehicle braking subsystem, vehicle driving subsystem, and vehicle steering assistance subsystem of the vehicle respectively, the braking operation, the acceleration operation, and the steering operation of the user may be quickly responded to when each subsystem receives the indication signal sent by the assisted driving system. Thus, within the transition stage after the driving assistance function is deactivated, the response time of manual vehicle control may be shortened, and driving safety may be improved.

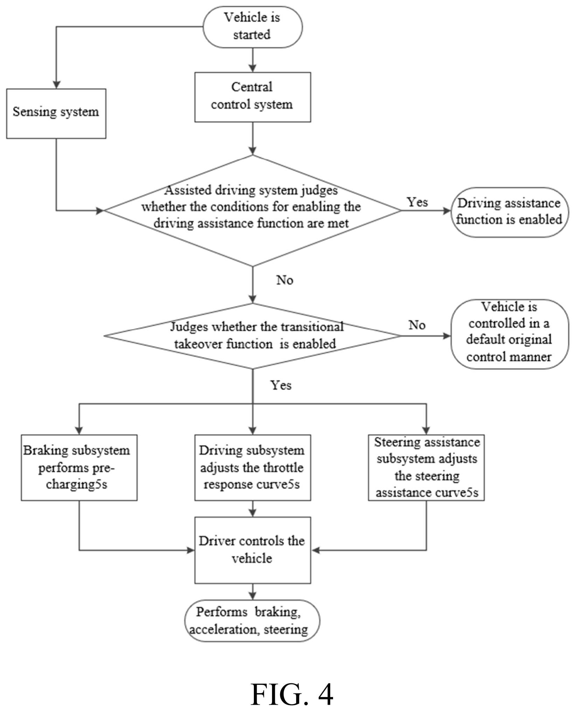

Referring to Fig. 4, it shows an exemplary flowchart of a specific application scenario provided by an embodiment of the present application. As shown in FIG. 4, after the vehicle is started, the assisted driving system collects judgment signals for exiting the driving assistance function S1 and S2 sent by the sensing system and the central control system. The assisted driving system judges whether the conditions for enabling the driving assistance function are met according to S1 and S2, and the judgment signal for exiting the driving assistance function S3 generated by detecting whether it has a fault. In response to meeting the conditions for enabling the driving assistance function, the driving assistance function is enabled. In response to not meeting the conditions for enabling the driving assistance function, it is judged whether the transitional takeover function provided by the embodiment of the present application is enabled. In response to the transitional takeover function not being enabled, the vehicle is manually controlled by the driver in a default original control manner. In response to the transitional takeover function being enabled, the braking subsystem performs pre-charging, and it is restored after 5 seconds, the driving subsystem adjusts the throttle response curve, and it is restored after 5 seconds, and the steering assistance subsystem adjusts the steering assistance curve, and it is restored after 5 seconds. Then the driver controls the vehicle and manually performs operations such as braking, acceleration, and steering.

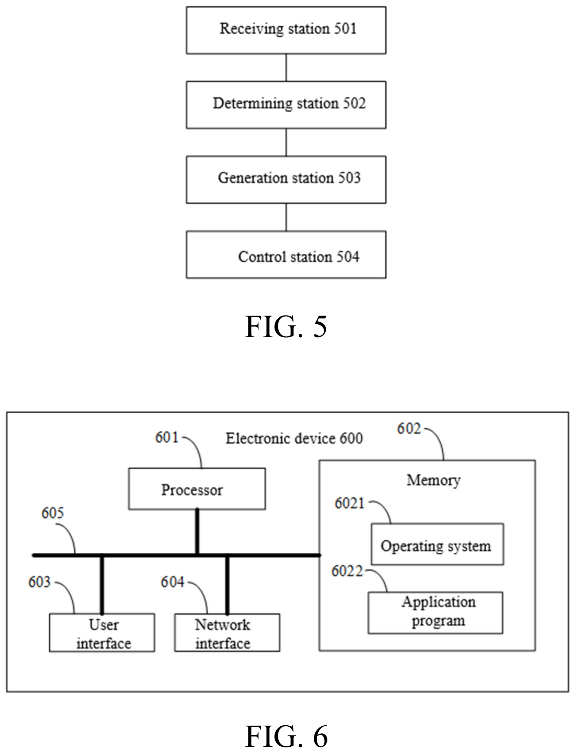

FIG. 5 is a schematic structural diagram of a vehicle driving control apparatus according to an embodiment of the present application. It specifically includes:
a receiving station 501 configured to receive a judgment signal for exiting a driving assistance function;
a determining station 502 configured to determine an activation of an exit operation for the driving assistance function based on the judgment signal for exiting the driving assistance function;
a generation station 503 configured to generate an indication signal indicating that the driving assistance function is currently exited, in response to the activation of the exit operation for the driving assistance function;
a control station 504 configured to control a control response parameter of the vehicle driving control system to be adjusted to a preset parameter based on the indication signal. In particular, the control response parameter is configured to perform a control for the vehicle within a corresponding response time, and a response time corresponding to the preset parameter is shorter than a response time corresponding to the control response parameter before adjustment.

In a possible implementation, the apparatus further includes: an adjustment station configured to adjust the control response parameter of the vehicle driving control system to the initial parameter, in response to a fact that a time difference between a current moment and an activating moment of the exit operation for the driving assistance function is greater than or equal to a preset transition duration, and that a control operation corresponding to the vehicle control system is not performed by a user at the current moment.

In a possible implementation, the vehicle driving control system includes at least one of the following: a vehicle braking subsystem, a vehicle driving subsystem, and a vehicle steering assistance subsystem; and the control station includes: a first control section configured to control the braking pressure of the vehicle braking subsystem to increase to a preset pressure based on the indication signal; and/or a second control section configured to adjust the throttle response curve of the vehicle driving subsystem based on the indication signal, so that the throttle torque response is increased by a first preset multiple; and/or a third control section configured to adjust the steering assistance curve of the vehicle steering assistance subsystem based on the indication signal, so that the steering assistance intensity is increased by a second preset multiple.

In a possible implementation, the determining station is further configured to determine an activation of the exit operation for the driving assistance function, in response to at least one of the following: the judgment signal for exiting the driving assistance function includes a first signal indicating switching from the assisted driving state to the manual driving state, includes a second signal indicating a fault of a sensor in the vehicle, and includes a third signal indicating a fault of the assisted driving system of the vehicle.

The vehicle driving control apparatus provided in the present embodiment may be the vehicle driving control apparatus shown in FIG. 5, which may perform all steps of each of the foregoing vehicle driving control methods, thereby achieving the technical effects of each of the foregoing vehicle driving control methods. For details, please refer to the above relevant descriptions, which are not repeated here for the sake of concise description.

FIG. 6 is a schematic structural diagram of an electronic device according to an embodiment of the present application. The electronic device 600 shown in FIG. 6 includes at least one processor 601, a memory 602, at least one network interface 604, and another user interface 603. The components in the electronic device 600 are coupled together by using a bus system 605. It may be understood that the bus system 605 is configured to implement connection and communication between these components. In addition to a data bus, the bus system 605 further includes a power bus, a control bus, and a status signal bus. However, for clear description, various buses are marked as the bus system 605 in FIG. 6.

Among them, the user interface 603 may include a display, a keyboard, or a pointing device (for example, a mouse, a trackball, a touch panel, or a touchscreen).

It may be understood that the memory 602 in the embodiments of the present application may be a volatile memory or a non-volatile memory, or may include both a volatile memory and a non-volatile memory. Among them, the non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), or a flash memory. The volatile memory may be a Random Access Memory (RAM), which serves as an external high-speed cache. By way of example but not limitation, many forms of RAM are available, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a Synchronous Link Dynamic Random Access Memory (SLDRAM), and a Direct Rambus Random Access Memory (DRRAM). The memory 602 described herein is intended to include, but is not limited to, these and any other suitable types of memory.

In some implementations, the memory 602 stores the following elements, executable units or data structures, or a subset thereof, or an extended set thereof: an operating system 6021 and an application program 6022.

Among them, the operating system 6021 includes various system programs, such as a framework layer, a core library layer, a driver layer, etc., for implementing various basic services and processing hardware-based tasks. The application program 6022 includes various application programs, such as a media player, a browser, etc., for implementing various application services. Programs for implementing the methods of the embodiments of the present application may be included in the application program 6022.

In the present embodiment, by calling programs or instructions stored in the memory 602, specifically, programs or instructions stored in the application program 6022, the processor 601 is configured to execute the method steps provided in each method embodiment, for example, including:
Receiving a judgment signal for exiting a driving assistance function; determining an activation of an exit operation for the driving assistance function based on the judgment signal for exiting the driving assistance function; generating an indication signal indicating that the driving assistance function is currently exited, in response to the activation of the exit operation for the driving assistance function; controlling a control response parameter of the vehicle driving control system to be adjusted to a preset parameter based on the indication signal. In particular, the control response parameter is configured to perform a control for the vehicle within a corresponding response time, and the response time corresponding to the preset parameter is shorter than the response time corresponding to the control response parameter before adjustment.

The methods disclosed in the above embodiments of the present application may be configured in the processor 601 or implemented by the processor 601. The processor 601 may be an integrated circuit chip with signal processing capabilities. In an implementation process, each step of the above methods may be completed by an integrated logic circuit of hardware in the processor 601 or instructions in the form of software. The above processor 601 may be a general-purpose processor, a Digital Signal Processor (DSP), an Application-Specific Integrated Circuit (ASIC), a Field Programmable Gate Array (FPGA) or another programmable logic device, a discrete gate or a transistor logic device, or a discrete hardware component. The methods, steps, and logical block diagrams disclosed in the embodiments of the present application may be implemented or executed. The general-purpose processor may be a microprocessor, or the processor may also be any conventional processor, etc. The steps of the methods disclosed with reference to the embodiments of the present application may be directly embodied as being executed and completed by a hardware decoding processor, or executed and completed by a combination of hardware and software units in the decoding processor. The software unit may be located in a mature storage medium in the art, such as a random access memory, a flash memory, a read-only memory, a programmable read-only memory, an electrically erasable programmable memory, or a register. The storage medium is located in the memory 602, and the processor 601 reads information in the memory 602 and completes the steps of the above method in combination with its hardware.

It may be understood that the embodiments described herein may be implemented by hardware, software, firmware, middleware, microcode, or a combination thereof. For hardware implementation, the processing unit may be implemented in one or more Application Specific Integrated Circuits (ASICs), Digital Signal Processors (DSPs), Digital Signal Processing Devices (DSPDs), Programmable Logic Devices (PLDs), Field-Programmable Gate Arrays (FPGAs), general-purpose processors, controllers, microcontrollers, microprocessors, other electronic units for executing the above functions of the present application, or a combinations thereof.

For software implementation, the technologies described herein may be implemented by units executing the above functions described herein. Software codes may be stored in a memory and executed by a processor. The memory may be implemented in the processor or external to the processor.

The electronic device provided in the present embodiment may be the electronic device shown in FIG. 6, which may perform all steps of each of the above-described vehicle driving control methods, thereby achieving the technical effects of each of the above-described vehicle driving control methods. For details, please refer to the above relevant descriptions, which are not repeated here for the sake of concise description.

The embodiment of the present application further provides a storage medium (computer-readable storage medium). The storage medium here stores one or more programs. The storage medium may include a volatile memory, such as a random access memory; the memory may also include a non-volatile memory, such as a read-only memory, a flash memory, a hard disk, or a solid-state disk; the memory may also include a combination of the above types of memories.

One or more programs in the storage medium may be executed by one or more processors to implement the vehicle driving control method performed on the electronic device side.

The above processor is configured to execute the program stored in the memory to implement the steps of the vehicle driving control method performed on the electronic device side as follows:
Receiving a judgment signal for exiting a driving assistance function; determining an activation of an exit operation for the driving assistance function based on the judgment signal for exiting the driving assistance function; generating an indication signal indicating that the driving assistance function is currently exited, in response to the activation of the exit operation for the driving assistance function; controlling a control response parameter of the vehicle driving control system to be adjusted to a preset parameter based on the indication signal. In particular, the control response parameter is configured to perform a control for the vehicle within a corresponding response time, and the response time corresponding to the preset parameter is shorter than the response time corresponding to the control response parameter before adjustment.

Professionals should further realize that the units and algorithm steps of each example described in combination with the embodiments disclosed herein may be implemented by electronic hardware, computer software, or a combination of the two. To clearly illustrate the interchangeability of hardware and software, the components and steps of each example have been generally described according to functions in the above description. Whether these functions are executed by hardware or software depends on the specific application and design constraint conditions of the technical solution. Professionals may use different methods to implement the described functions for each specific application, but such implementation should not be considered as going beyond the scope of the present application.

The steps of the methods or algorithms described in conjunction with the embodiments disclosed herein may be implemented by hardware, software modules executed by a processor, or a combination of the two. Software modules may be placed in a Random Access Memory (RAM), internal memory, Read-Only Memory (ROM), electrically programmable ROM, electrically erasable programmable ROM, registers, hard disks, removable disks, CD-ROMs, or any other form of storage medium known in the technical field.

It should be understood that the terms used herein are merely for the purpose of describing specific example implementations and are not intended to be limiting. Unless the context clearly indicates otherwise, the singular forms "a", "an" and "the" as used herein may also mean including plural forms. The terms "including", "comprising", "containing" and "having" are inclusive and thus indicate the existence of the stated features, steps, operations, elements and/or components, but do not exclude the existence or addition of one or more other features, steps, operations, elements, components and/or combinations thereof. The method steps, processes, and operations described herein are not to be interpreted as necessarily requiring them to be executed in the specific order described or illustrated, unless the execution order is clearly specified. It should also be understood that additional or alternative steps may be used.

The foregoing descriptions are merely specific implementations of the present application, enabling those skilled in the art to understand or implement the present application. Various modifications to these embodiments will be obvious to those skilled in the art, and the general principles defined herein may be implemented in other embodiments without departing from the spirit or scope of the present application. Therefore, the present application will not be limited to the embodiments shown herein, but is to conform to the widest scope consistent with the principles and novel features disclosed herein.

## Claims

1. A vehicle driving control method, comprising:
receiving a judgment signal for exiting a driving assistance function;
determining an activation of an exit operation for the driving assistance function based on the judgment signal for exiting the driving assistance function;
generating an indication signal indicating that the driving assistance function is currently exited, in response to the activation of the exit operation for the driving assistance function; and
controlling a control response parameter of the vehicle driving control system to be adjusted to a preset parameter based on the indication signal, wherein the control response parameter is configured to perform a control for the vehicle within a corresponding response time, and a response time corresponding to the preset parameter is shorter than a response time corresponding to the control response parameter before adjustment.

2. The method according to claim 1, wherein after the controlling the control response parameter of the vehicle driving control system to be adjusted to the preset parameter based on the indication signal, the method further comprises:
adjusting the control response parameter of the vehicle driving control system to an initial parameter, in response to a fact that a time difference between a current moment and an activating moment of the exit operation for the driving assistance function is greater than or equal to a preset transition duration, and that a control operation corresponding to the vehicle control system is not performed by a user at the current moment.

3. The method according to claim 1, wherein the vehicle driving control system comprises at least one of the following: a vehicle braking subsystem, a vehicle driving subsystem, and a vehicle steering assistance subsystem;
wherein the controlling the control response parameter of the vehicle driving control system to be adjusted to the preset parameter based on the indication signal comprises at least one of the following:
controlling a braking pressure of the vehicle braking subsystem to increase to a preset pressure based on the indication signal;
adjusting a throttle response curve of the vehicle driving subsystem to increase a throttle torque response by a first preset multiple based on the indication signal; and
adjusting a steering assistance curve of the vehicle steering assistance subsystem to increase a steering assistance intensity by a second preset multiple based on the indication signal.

4. The method according to claim 1, wherein the determining the activation of the exit operation for the driving assistance function based on the judgment signal for exiting the driving assistance function comprises:
determining an activation of the exit operation for the driving assistance function, in response to at least one of the following: the judgment signal for exiting the driving assistance function comprises a first signal indicating switching from an assisted driving state to a manual driving state, comprises a second signal indicating a fault of a sensor in the vehicle, and comprises a third signal indicating a fault of the assisted driving system of the vehicle.

5. A vehicle, the vehicle comprises: an assisted driving system and a vehicle driving control system, wherein the assisted driving system and the vehicle driving control system are communicatively connected;
the assisted driving system is configured to receive a judgment signal for exiting a driving assistance function; to determine an activation of an exit operation for the driving assistance function based on the judgment signal for exiting the driving assistance function; to generate an indication signal indicating that the driving assistance function is currently exited, in response to the activation of the exit operation for the driving assistance function, and to send the indication signal to the vehicle driving control system; and
the vehicle driving control system is configured to receive the indication signal and adjust a control response parameter of the vehicle driving control system to a preset parameter, wherein the control response parameter is configured to perform a control for the vehicle within a corresponding response time, and a response time corresponding to the preset parameter is shorter than a response time corresponding to the control response parameter before adjustment.

6. The vehicle according to claim 5, wherein the vehicle further comprises a central control system and a sensing system;
the central control system is configured to send a first signal to the assisted driving system when detecting that a driving state is switched from a driving assistance state to a manual driving state by a user;
the sensing system is configured to send a second signal to the assisted driving system when detecting a fault of a sensor in the vehicle; and
the assisted driving system is further configured to generate a third signal when detecting a fault of the assisted driving system, and to determine the activation of the exit operation for the driving assistance function when detecting at least one of the first signal, the second signal, and the third signal.

7. The vehicle according to claim 5, wherein the vehicle driving control system comprises at least one of the following: a vehicle braking subsystem, a vehicle driving subsystem, and a vehicle steering assistance subsystem;
wherein the vehicle braking subsystem is configured to control a braking pressure of the vehicle braking subsystem to increase to a preset pressure, in response to receiving the indication signal;
the vehicle driving subsystem is configured to adjust a throttle response curve of the vehicle driving subsystem to increase a torque response by a first preset multiple, in response to receiving the indication signal; and
the vehicle steering assistance subsystem is configured to adjust the steering assistance curve of the vehicle steering assistance subsystem to increase the steering assistance intensity by a second preset multiple, in response to receiving the indication signal.

8. A vehicle driving control apparatus, comprising:
a receiving station configured to receive a judgment signal for exiting a driving assistance function;
a determining station configured to determine an activation of an exit operation for the driving assistance function based on the judgment signal for exiting the driving assistance function;
a generation station configured to generate an indication signal indicating that the driving assistance function is currently exited, in response to the activation of the exit operation for the driving assistance function; and
a control station configured to control a control response parameter of the vehicle driving control system to be adjusted to a preset parameter based on the indication signal, wherein the control response parameter is configured to perform a control for the vehicle within a corresponding response time, and a response time corresponding to the preset parameter is shorter than a response time corresponding to the control response parameter before adjustment.

9. An electronic device, comprising:
a memory configured to store a computer program; and
a processor configured to execute the computer program stored in the memory, and when the computer program is executed, the vehicle driving control method according to any one of claims 1 to 4 is implemented.

10. A computer-readable storage medium, wherein a computer program stored on the computer-readable storage medium, and wherein when the computer program is executed by a processor, the vehicle driving control method according to any one of claims 1 to 4 is implemented.
